(19) Europäisches Patentamt
European Patent Office
Office européen des brevets

(11) Veröffentlichungsnummer : **0 292 825 B1**

(12) # EUROPÄISCHE PATENTSCHRIFT

(45) Veröffentlichungstag der Patentschrift :
**07.08.91 Patentblatt 91/32**

(51) Int. Cl.$^5$ : **C09B 62/513,** D06P 1/38

(21) Anmeldenummer : **88107805.9**

(22) Anmeldetag : **16.05.88**

(54) **Reaktivfarbstoffe.**

(30) Priorität : **27.05.87 DE 3717814**

(43) Veröffentlichungstag der Anmeldung :
**30.11.88 Patentblatt 88/48**

(45) Bekanntmachung des Hinweises auf die Patenterteilung :
**07.08.91 Patentblatt 91/32**

(84) Benannte Vertragsstaaten :
**CH DE FR GB LI**

(56) Entgegenhaltungen :
**EP-A- 0 051 807**
**DE-A- 1 911 427**
**CHEMICAL ABSTRACTS, vol. 106, no. 4, Jan 1987, Columbus, OH (US); p. 64, no. 19942n**

(73) Patentinhaber : **BAYER AG**
**W-5090 Leverkusen 1 Bayerwerk (DE)**

(72) Erfinder : **Herd, Karl Josef, Dr.**
**Am Gartenfeld 66**
**W-5068 Odenthal (DE)**

**EP 0 292 825 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der Erfindung sind Polyazoreaktivfarbstoffe der Formel (1)

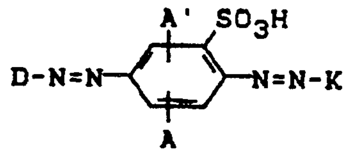

(1)

worin

D = Rest einer Diazokomponente der Formeln

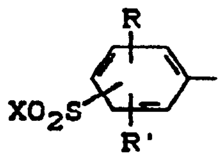

(2a) bzw.

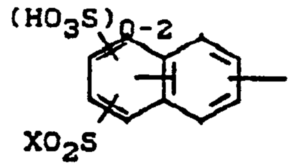

(2b)

A, A' = H, $C_1$-$C_4$-Alkyl, $C_1$-$C_4$-Alkoxy oder Halogen,
R, R' = H, $C_1$-$C_4$-Alkyl, $C_1$-$C_4$-Alkoxy, Halogen, $CO_2H$ oder $SO_3H$,
X = $-CH{=}CH_2$ oder $-CH_2$-$CH_2-$Y, worin
Y = alkalisch eliminierbarer Rest, und
K = Rest einer Kupplungskomponente der Pyridon-, Pyrazolon-, Pyrazolopyridon-, Acetessigsäurearylid-, N-(3-Aminophenyl)acetamid-, 3-Aminophenylureido-, Naphthylamin-, Naphthol- oder Naphtholamin-Reihe, wobei der Rest K weitere Azogruppen oder azogruppenhaltige Reste sowie weitere faserreaktive Reste aufweisen kann.

Beispiele für den Rest Y sind : $OSO_3H$, $SSO_3H$, $OCOCH_3$, $OPO_3H_2$, $OSO_2CH_3$, SCN, $NHSO_2CH_3$, Cl, Br, F, $OCOC_6H_5$, $OSO_2$-$C_6H_4$-$CH_3$ oder $N(CH_3)_3^+Cl^-$.

Die genannten $C_1$-$C_4$-Alkyl- bzw. $C_1$-$C_4$-Alkoxy-Reste können entweder verzweigt oder geradkettig sein.

Beispiele für die den Resten K zugrundeliegenden Kupplungskomponenten HK sind : 6-Hydroxy-2-pyridone, Citrazinsäurederivate, Pyrazolo[3,4-b]pyridin-3,6-dione, 1-arylsubstituierte 3-Methyl(3-carboxy)-5-hydroxypyrazole, 1- bzw. 2-Aminonaphthalin-mono- bzw. -disulfonsäuren, 1- bzw. 2-Naphthol-mono- bzw. -disulfonsäuren, amino- bzw. acylaminosubstituierte 1-Naphthol-mono- bzw. -disulfonsäuren, 7-Arylazo-8-amino-1-naphthol-3,5(3,6)-disulfonsäuren.

Die Reste K können die üblichen Substituenten, insbesondere Sulfonsäure- oder Carboxygruppen aufweisen. Geeignete Substituenten sind z.B. Methyl, Ethyl, Methoxy, Ethoxy, Acetylamino, Benzoylamino, Mesylamino, Amino, Chlor, Brom, Ureido, Hydroxy, Sulfomethyl, Phenyl, Benzyl, Phenylamino, Aminocarbonyl oder faserreaktive Reste tragende Amino- bzw. Aminoalkyl-Substituenten. Der Rest K kann ebenso wie der Rest D zusätzlich mit einer $SO_2X$-Gruppierung substituiert sein.

Geeignete faserreaktive Reste sind in großer Zahl in der Literatur beschrieben. Beispielhaft seien erwähnt:

2,4-Dichlortriazinyl-6-, Monohalogen-sym.-triazinylreste, insbesondere Monochlor- und Monofluortriazinylreste, die durch Amino, Monoalkylamino, Dialkylamino, Arylamino, Aralkylamino, Alkoxy, Aryloxy substituiert sind, wobei Aryl vorzugsweise gegebenenfalls substituiertes Phenyl oder Naphthyl bedeutet und Alkyl gegebenenfalls substituiertes $C_1$-$C_4$-Alkyl bedeutet und wobei bevorzugte Substituenten Carboxy, Sulfo oder Sulfato sind.

Mono-, Di- oder Trihalogenpyrimidinylreste, wie 2,4-Dichlorpyrimidinyl-6-, 2,4,5-Trichlorpyrimidinyl-6-, 2,6-Dichlorpyrimidinyl-4-carbonyl-, 2,6-Dichlorpyrimidinyl-5-carbonyl-, 2-Fluor-4-pyrimidinyl-, 2,6-Difluor-5-methyl-4-pyrimidinyl-, 2,6-Difluor-5-chlor-4-pyrimidinyl-, 2-Fluor-6-methyl-5-chlor-4-pyrimidinyl-, 2,5,6-Trifluor-4-pyrimidinyl-, 5-Chlor-6-chlormethyl-2-fluor-4-pyrimidinyl-, 5-Chlor-6-dichlormethyl-2-fluor-4-pyrimidinyl-, 5-Chlor-6-trichlormethyl-2-fluor-4-pyrimidinyl-, 5-Chlor-2-trichlormethyl-6-fluor-4-pyrimidinyl-, 5-Chlor-2-fluordichlormethyl-6-fluor-4-pyrimidinyl-, 2-Fluor-5-chlor-4-pyrimidinyl-, 2-Fluor-6-phenyl-4-pyrimidinyl-, 6-Fluor-5-chlor-2-methyl-4-pyrimidinyl-, 2-Methylsulfonyl-6-methyl-4-pyrimidinyl- sowie 2,3-Dichlorchinoxalin-6-carbonyl-.

Geeignete Reste D zugrundeliegende Diazokomponenten sind bspw.:

Anilin-4-β-sulfatoethylsulfon, Anilin-4-β-thiosulfatoethylsulfon, Anilin-4-vinylsulfon, Anilin-4-β-chlorethylsulfon, Anilin-3-β-sulfatoethylsulfon, Anilin-3-vinylsulfon, 2-Methoxy-anilin-5-β-sulfatoethylsulfon, 2-Methoxy-anilin-5-β-thiosulfatoethylsulfon, 2-Methoxy-anilin-5-vinylsulfon, 4-Methoxy-anilin-3-β-sulfatoethylsulfon, 4-Methoxy-anilin-3-β-vinylsulfon, 2,5-Dimethoxy-anilin-4-β-sulfatoethylsulfon, 2,5-Dimethoxy-anilin-4-vinylsulfon, 2,5-Dichlor-anilin-4-β-sulfatoethylsulfon, 2-Methoxy-5-methyl-anilin-4-β-sulfatoethylsulfon, Anilin-2-β-sulfatoethylsulfon, 2-Chloranilin-5-β-sulfatoethylsulfon, 4-Chloranilin-3-β-sulfatoethylsulfon, 3-(3- oder 4-Aminobenzoyl) -aminophenyl-β-sulfatoethylsulfon, 2-Methoxy-5-methyl-anilin-4-vinylsulfon, 6-Carboxy-anilin-3-β-sulfatoethylsulfon, 6-Carboxyanilin-3-vinylsulfon, 2-Sulfoanilin-4-β-sulfatoethylsulfon, 2-Sulfoanilin-4-vinylsulfon, 2,4-Disulfoanilin-5-vinylsulfon, 2-Naphthylamin-8-β-sulfatoethylsulfon, 2-Naphthylamino-6-β-sulfatoethylsulfon, 1-Sulfo-2-naphthylamin-6-β-sulfatoethylsulfon, 1-Naphthylamin-4-β-sulfatoethylsulfon, 1-Sulfo-2-napthylamin-5-β-sulfatoethylsulfon, 6-Sulfo-2-naphthylamin-8-β-sulfatoethylsulfon, 2-Amino-3-sulfo-naphthalin-6,8-bis-(β-sulfatoethylsulfon), 2-Brom-1-aminobenzol-4-β-sulfatoethylsulfon, 2,6-Dichlor-1-aminobenzol-4-β-sulfatoethylsulfon, 1-Naphthylamin-5-β-sulfatoethylsulfon, 2-Naphthylamin-5-β-sulfatoethylsulfon, 2-Naphthylamin-8-β-sulfatoethylsulfon, 8-Sulfo-2-napthylamin-6-β-sulfatoethylsulfon.

Bevorzugte Farbstoffe (1) sind solche der Formel

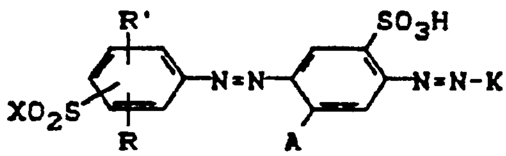

(3),

insbesondere solche mit

A = H, $CH_3$, Cl oder $OCH_3$,
R, R′ = H, Cl, $OCH_3$ oder $SO_3H$,
X = $CH_2CH_2OSO_3H$ oder $CH{=}CH_2$ und

K =

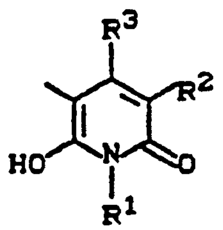

mit

$R^1$ = H, $C_1$-$C_4$-Alkyl, $CH_2CH_2SO_3H$, $CH_2CH_2OSO_3H$, Aryl oder —$(CH_2)_{2-3}$-NHZ,
$R^2$ = H, Cl, $SO_3H$, $CONH_2$, $CH_2SO_3H$, CN oder $SO_2CH_3$,
$R^3$ = H, $C_1$-$C_4$-Alkyl, $CH_2SO_3H$, Aryl, $CO_2H$, $CO_2CH_3$ oder $CONH_2$, und
Z = H, Acyl, Benzoyl oder faserreaktiver heterocyclischer Rest,

K =

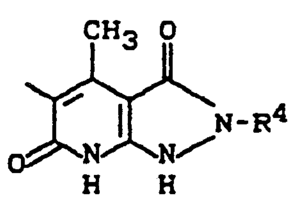

mit

$R^4$ = H, $C_1$-$C_4$-Alkyl, Phenyl, $CH_2CH_2OSO_3H$ oder p-$C_6H_4$-$SO_3H$,

K = 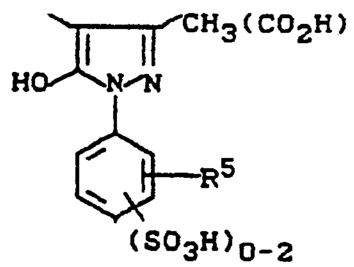

mit

R⁵ = H, Cl, $CH_3$, $OCH_3$ oder NHZ,

K = 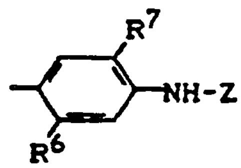

mit

$R^6$ = Ureido, $NHCOCH_3$, $NHCOC_6H_5$ oder $NHSO_2CH_3$, und

$R^7$ = H, $CH_3$, $OCH_3$ oder $SO_3H$,

K = 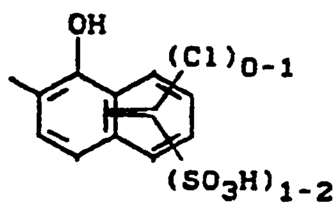 , 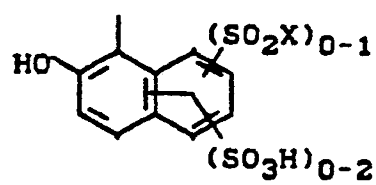 ,

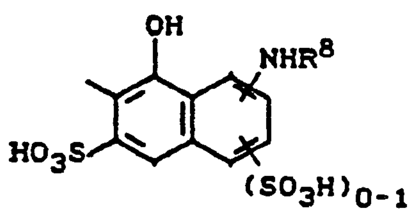 ,

mit

$R^8$ = $C_1$-$C_4$-Alkyl, Phenyl, Aminobenzoyl und Z,

oder K = 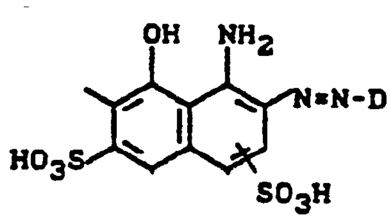

wobei

Aryl = gegebenenfalls substituiertes Phenyl (bevorzugte Substituenten Cl, $C_1$-$C_4$-Alkyl, $SO_3H$, COOH, $C_1$-$C_4$-Alkoxy) und Acyl bevorzugt für $C_1$-$C_4$-Alkylcarbonyl oder gegebenenfalls substituiertes Phenylcarbonyl steht.

Bevorzugte Farbstoffe sind insbesondere solche der folgenden Formeln :

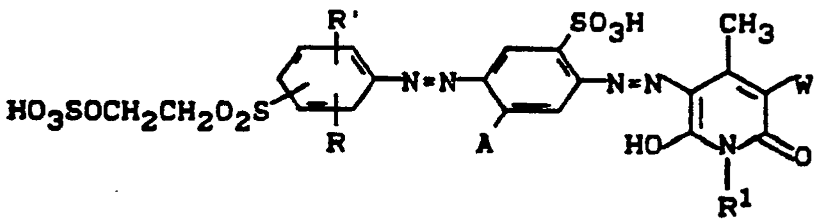

(4)

mit W = H, $SO_3H$ oder $CH_2SO_3H$,

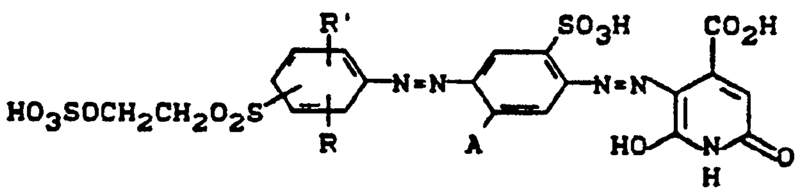

(5)

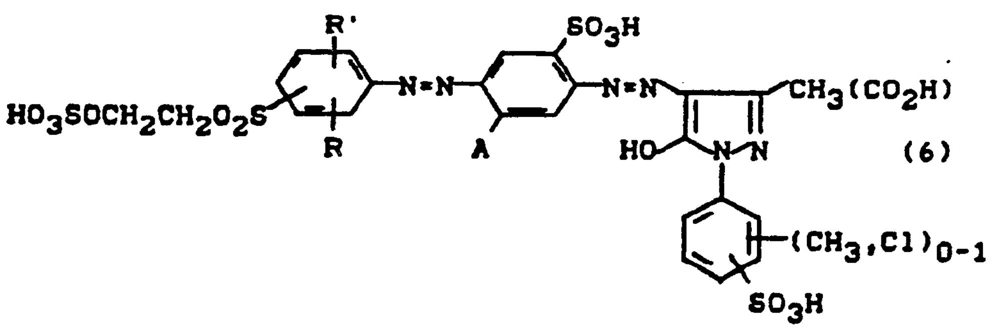

(6)

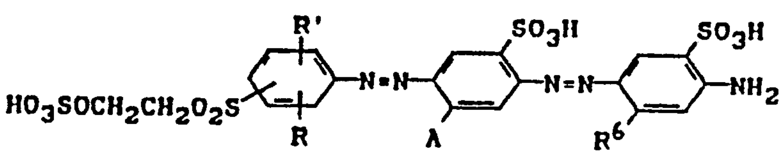

(7)

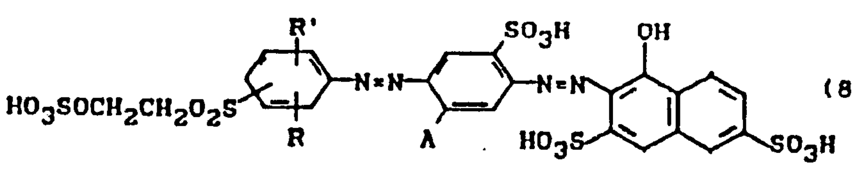

(8)

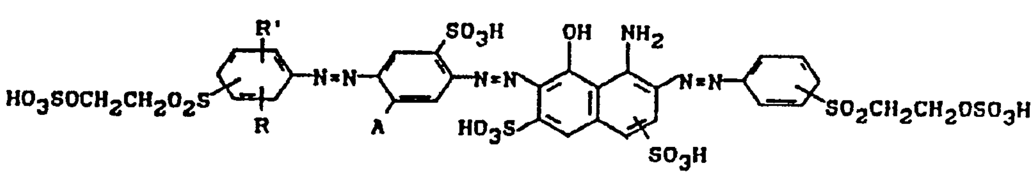

(9)

Die Herstellung der erfindungsgemäßen Polyazoreaktivfarbstoffe erfolgt in üblicher Weise, indem man Aminoazoverbindungen der Formel (10)

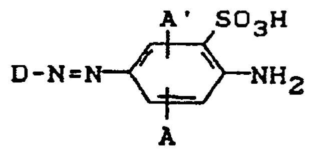

(10)

in welcher D, A und A' die unter Formel (1) genannte Bedeutung haben, diazotiert und mit einer Kupplungskomponente HK zu (1) kuppelt.

Farbstoffe der Formel (1), bei denen X für eine β-Hydroxyethylgruppe steht, lassen sich auch mit Hilfe eines Sulfatierungsmittels in die entsprechenden Farbstoffe (1) mit X = $CH_2CH_2OSO_3H$ oder mit einem Phosphatierungsmittel in entsprechende Farbstoffe (1) mit X = $CH_2CH_2OPO_3H_2$ überführen.

Die Erfindung betrifft weiterhin die Verwendung der Verbindungen der Formel (10) und insbesondere (11) zur Herstellung der erfindungsgemäßen Farbstoffe der Formel (I). Die Erfindung betrifft weiterhin die Verwendung von Verbindungen der Formel (10) und (11) zum Färben und Bedrucken von hydroxyl- und amidgruppenhaltigen Materialien. Der EP-A-51807 sind zwar Verbindungen der Formel (10) und (11) als Zwischenprodukte entnehmbar ohne daß jedoch ein Hinweis darauf erfolgt, daß bereits mit diesen Verbindungen gefärbt werden kann.

Bevorzugt sind dabei Aminoazoverbindungen der Struktur

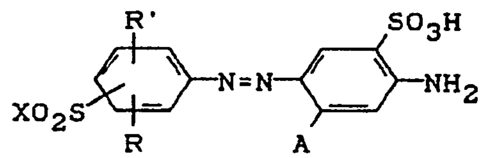

(11)

worin X, R' und R die unter Formel (1) genannte Bedeutung haben und A = $C_1$-$C_4$-Alkyl, $C_1$-$C_4$-Alkoxy oder Halogen.

Besonders bevorzugt sind Aminoazoverbindungen der Struktur (11), worin

| | |
|---|---|
| X = | $CH=CH_2$, $CH_2$-$CH_2OSO_3H$ oder $CH_2$-$CH_2SSO_3H$, |
| R bzw. R' = | H, Cl, $OCH_3$ oder $SO_3H$ und |
| A = | $CH_3$ Cl oder $OCH_3$. |

Das erfindungsgemäße Verfahren zur Herstellung der neuen Zwischenverbindungen (10) mit X = $CH_2CH_2OSO_3H$, —$CH=CH_2$ bzw. —$CH_2CH_2SSO_3H$, die ihrerseits selbst wertvolle Monoazoreaktivfarbstoffe darstellen, besteht darin, daß man bekannte Diazokomponenten der Struktur

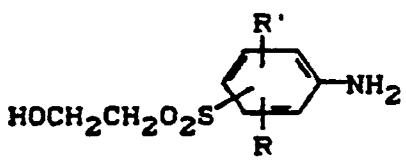

bzw.

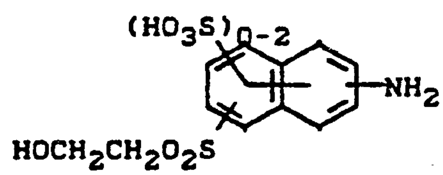

(12a) (12b)

diazotiert und auf Anilinderivate der Struktur

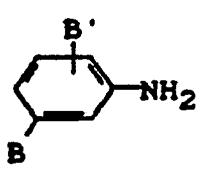

bzw.

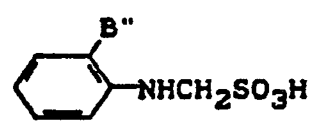

(13a) (13b)

worin

B = $C_1$-$C_4$-Alkyl, $C_1$-$C_4$-Alkoxy oder Halogen,
B′ = H, $C_1$-$C_4$-Alkyl, $C_1$-$C_4$-Alkoxy oder Halogen,
B″ = H, $C_1$-$C_4$-Alkyl oder $C_1$-$C_4$-Alkoxy und

die p-Stellung zur Aminfunktion in (13a) unsubstituiert ist,
kuppelt, im Falle der resultierenden Aminoazoverbindungen der Formel

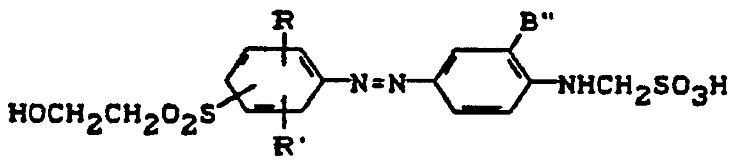
(14a)

bzw.

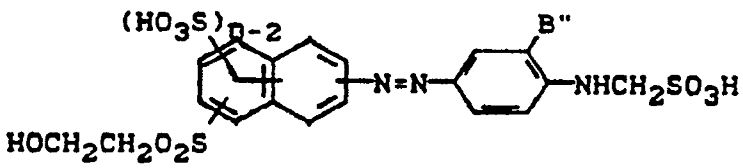
(14b)

durch alkalische Verseifung die Sulfomethyl-Schutzgruppe wieder abspaltet, und die danach verfügbaren Aminoazoverbindungen der Formel

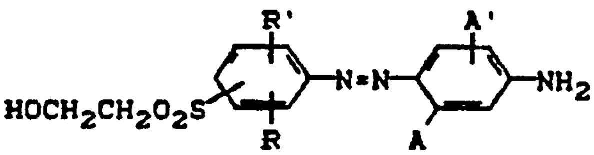
(15a)

bzw.

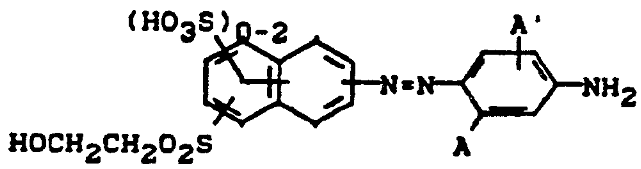
(15b)

mit Hilfe eines Sulfierungsreagenz, wie z.B. Oleum, bei 20-80°C gleichzeitig an der Hydroxyethylgruppierung sulfatiert und in o-Position zur freien Aminofunktion sulfiert. Nach bekannten Methoden ist die Sulfatoethylsulfonyl-Gruppierung dann auch in die Vinylsulfonyl- bzw. Thiosulfatoethylsulfonyl-Gruppierung überführbar.

Aminoazoverbindungen der Formel (10) mit A = $C_1$-$C_4$-Alkyl und $C_1$-$C_4$-Alkoxy sind auch durch direkte Diazotierung entsprechender Diazokomponenten D-$NH_2$ und Kupplung auf die ausgewählten o-Sulfoaniline der Struktur

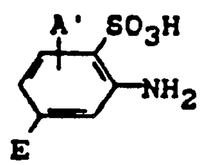
(16)

worin

E = $C_1$-$C_4$-Alkyl oder $C_1$-$C_4$-Alkoxy und
A' = H, $C_1$-$C_4$-Alkyl, $C_1$-$C_4$-Alkoxy und Halogen, darstellbar.

Ausgewählte Beispiele für die neuen Aminoazoverbindungen sind :
2'-(β-Sulfatoethylsulfonyl)-3-sulfo-4-aminoazobenzol,
3'-(β-Sulfatoethylsulfonyl)-3-sulfo-4-aminoazobenzol,
2',5'-Dichlor-4'-(β-sulfatoethylsulfonyl)-3-sulfo-4-aminoazobenzol,
4'-Methoxy-3'-(β-sulfatoethylsulfonyl)-3-sulfo-4-aminoazobenzol,
4'-Vinylsulfonyl-2',3-disulfo-4-aminoazobenzol,
4'-Chlor-3'-(β-sulfatoethylsulfonyl)-3-sulfo-4-aminoazobenzol,
2'-(β-Sulfatoethylsulfonyl)-6-methyl-3-sulfo-4-aminoazobenzol,
3'-(β-Sulfatoethylsulfonyl)-6-methyl-3-sulfo-4-aminoazobenzol,
4'-(β-Sulfatoethylsulfonyl)-6-methyl-3-sulfo-4-aminoazobenzol,
2',5'-Dichlor-4'-(β-sulfatoethylsulfonyl)-6-methyl-3-sulfo-4-aminoazobenzol,
2'-Chlor-5'-(β-sulfatoethylsulfonyl)-6-methyl-3-sulfo-4-aminoazobenzol,
4'-(β-Sulfatoethylsulfonyl)-2,6-dimethyl-3-sulfo-4-aminoazobenzol,
4'-(β-Sulfatoethylsulfonyl)-6-chlor-5-methyl-3-sulfo-4-aminoazobenzol,
4'-(β-Sulfatoethylsulfonyl)-5-chlor-2-methyl-3-sulfo-4-aminoazobenzol,
4'-(β-Sulfatoethylsulfonyl)-6-chlor-3-sulfo-4-aminoazobenzol,
3'-(β-Sulfatoethylsulfonyl)-6-chlor-3-sulfo-4-aminoazobenzol,
2',5',6-Trichlor-4'-(β-sulfatoethylsulfonyl)-3-sulfo-4-aminoazobenzol,
3'-(β-Sulfatoethylsulfonyl)-6',3-disulfo-6-chlor-4-aminoazobenzol,
3'-(β-Sulfatoethylsulfonyl)-6-methoxy-3-sulfo-4-aminoazobenzol,
3'-4'-Bis-(β-sulfatoethylsulfonyl)-6-methoxy-3-sulfo-4-aminoazobenzol,
4'-(β-Sulfatoethylsulfonyl)-6-methoxy-3-sulfo-4-aminoazobenzol,
2'-5'-Dichlor-4'-(β-sulfatoethylsulfonyl)-6-methoxy-3-sulfo-4-aminoazobenzol,
4'-(β-Sulfatoethylsulfonyl)-2-methyl-5-methoxy-3-sulfo-4-aminoazobenzol,
4'-(β-Sulfatoethylsulfonyl)-2,5-dimethoxy-3-sulfo-4-aminoazobenzol,
3'-(β-Sulfatoethylsulfonyl)-2,5-dimethoxy-3-sulfo-4-aminoazobenzol,
2',5'-Dichlor-4'-(β-sulfatoethylsulfonyl)-2,5-diethoxy-3-sulfo-4-aminoazobenzol,
2-(4'-Amino-3'-sulfophenylazo)-6-(β-sulfatoethylsulfonyl)-naphthalin,
2-(4'-Amino-6'-methyl-3'-sulfophenylazo)-1-sulfo-6-(β-sulfatoethylsulfonyl)-naphthalin,
2-(4'-Amino-6'-methyl-3'-sulfophenylazo)-6-(β-sulfatoethylsulfonyl)-naphthalin,
2-(4'-Amino-3'-sulfophenylazo)-8-sulfo-6-(β-sulfatoethylsulfonyl)-naphthalin,
2-(4'-Amino-6'-methyl-3'-sulfophenylazo)-1,7-disulfo-5-(β-sulfatoethylsulfonyl)-naphthalin.

Die erfindungsgemäßen Reaktivfarbstoffe der Formel (1) eignen sich zum Färben und Bedrucken der verschiedenartigsten Materialien, wie Seide, Leder, Wolle, Polyamidfasern, insbesondere aber cellulosehaltiger Materialien, wie Leinen, Zellstoff, regenerierter Cellulose und vor allem Baumwolle. Sie eignen sich sowohl im Ausziehverfahren als auch für das Foulardfärbeverfahren, wonach die Ware mit wäßrigen und gegebenenfalls auch salzhaltigen Farbstofflösungen imprägniert wird, und die Farbstoffe nach einer Alkalibehandlung oder in Gegenwart von Alkali, evtl. in der Wärme, fixiert werden.

Die Reaktivfarbstoffe der Formel (1) eignen sich besonders zum Färben von Baumwolle nach dem Ausziehverfahren und dem Kaltverweilverfahren, wobei die Differenz zwischen Ausziehgrad und Fixiergrad bemerkenswert klein, d.h. der Hydrolyseanteil sehr gering ist. Die Farbstoffe sind hervorragend wasserlöslich und ergeben Färbungen mit gutem bis sehr gutem Echtheitsniveau.

Die angegebenen Formeln sind die der freien Säuren ; bei der Herstellung werden im allgemeinen die Salze erhalten, insbesondere die Alkalisalze wie Natrium-, Kalium- oder Lithiumsalze.

Die in den nachfolgenden Beispielen genannten $\lambda_{max}$-Werte wurden alle in Wasser als Lösungsmittel ermittelt.

Beispiel 1

320 g 4'-(β-Hydroxyethylsulfonyl)-2-methyl-4-aminoazobenzol werden in 600 ml 20%iges Oleum so eingetragen, daß die Temperature 30°C nicht übersteigt. Man rührt 2 Stunden bei Raumtemperatur und anschließend die mittlerweile klare Lösung 4 Stunden bei 60°C. Sollte die Sulfierungsreaktion zu diesem Zeitpunkt noch unvollständig sein, kann sie durch Zugabe von 50 ml 65%igem Oleum komplettiert werden. Die Reaktionslösung wird auf 20°C abgekühlt und auf eine Mischung aus 500 ml Wasser/2 kg Eis ausgetragen. Das ausgefallene 4'-(β-Sulfatoethylsulfonyl)-2-methyl-5-sulfo-4-aminoazobenzol wird abgesaugt und mit gesättigter Kochsalzlösung weitgehend säurefrei gewaschen. Die orangerote Paste kann direkt zur Diazotierung eingesetzt werden.

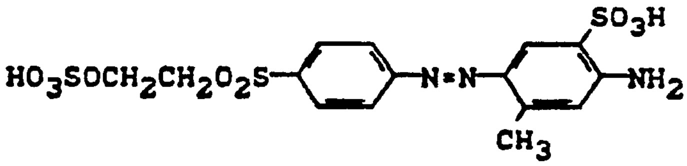

(402 nm)

Beispiel 2

116 g der feuchten Paste (43%ig) von Bsp. 1 werden in 400 ml Wasser angerührt, mit 50 g Eis versetzt und langsam mit 25 ml einer 30%igen wäßrigen Natriumnitritlösung diazotiert. Nach 1-stündigem Rühren bei 15-20°C wird der Nitritüberschuß mit Amidosulfonsäure entfernt. Zu dieser Diazoniumsalzlösung fügt man 30g 3-Aminocarbonyl-1,4-dimethyl-5-sulfomethyl-6-hydroxy-2-pyridon (Na-Salz) und stellt den pH-Wert der Kupplungsmischung mit Sodalösung auf 7,0. Bei pH 6,5-7,5 rührt man 1 Stunde nach, salzt mit 60 g Kochsalz aus und isoliert durch Absaugen. Die Farbstoffpaste wird getrocknet. Das rote Farbstoffpulver, dem die Struktur

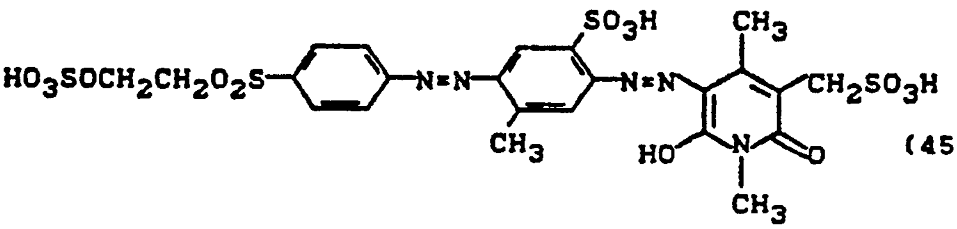

(455 nm)

zukommt, färbt Baumwolle in brillantem orangegelbem Farbton mit hohem Echtheitsniveau.

Beispiel 3

Setzt man analog Beispiel 2 als Kupplungskomponente Citrazinsäure ein, so erhält man einen Farbstoff der Struktur

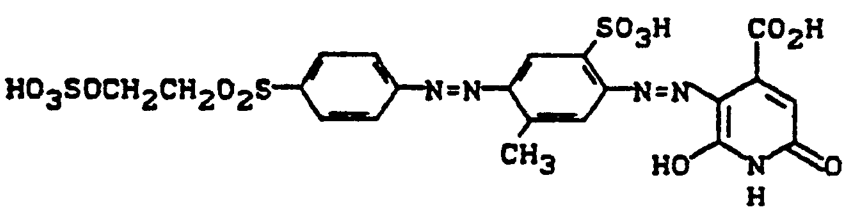

(452 nm)

der Baumwolle in brillantem Orangeton färbt.

Beispiel 4

Ersetzt man in Beispiel 2 die Pyridonkupplungskomponente durch 4-Methyl-2-(4'-sulfophenyl)-2,3-dihydropyrazolo[3,4-b]pyridin-3,6-dion und verfährt analog, so erhält man ein dunkelbraunes Farbstoffpulver der Formel

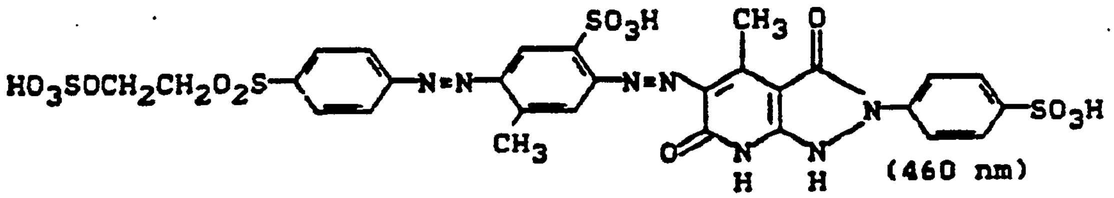

das Baumwolle in tiefen Brauntönen färbt.

Durch Substituentenvariation in der Diazokomponente, der Mittelkomponente und der Pyridonkupplungskomponente sind auf dem angegebenen Wege folgende Reaktivfarbstoffe zugänglich :

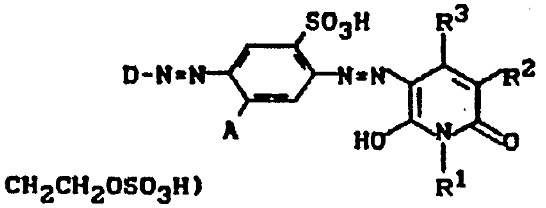

(X = $CH_2CH_2OSO_3H$)

| Bsp. | D | A | $R^1$ | $R^2$ | $R^3$ | Farbton |
|---|---|---|---|---|---|---|
| 5 | 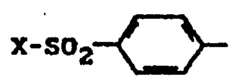 | H | $CH_3$ | $CH_2SO_3H$ | $CH_3$ | gelbstichig Orange |
| 6 | 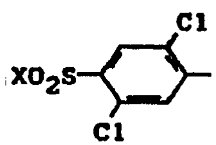 | H | $CH_3$ | $CH_2SO_3H$ | $CH_3$ | Goldgelb |
| 7 | 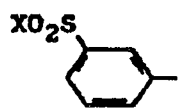 | $CH_3$ | $CH_3$ | $SO_3H$ | $CH_3$ | Orange |
| 8 | 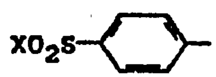 | $CH_3$ | $CH_2CH_2-SO_3H$ | H | $CH_3$ | Goldgelb |
| 9 | " | $OCH_3$ | $CH_3$ | $CH_2SO_3H$ | $CH_3$ | Orange |
| 10 | 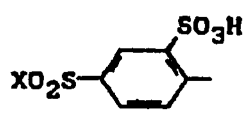 | $CH_3$ | $C_2H_5$ | $CONH_2$ | $CH_3$ | Orange |
| 11 | 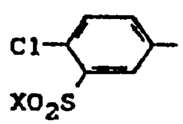 | $CH_3$ | $CH_3$ | H | $CO_2H$ | gelbstichig Orange |

Beispiel 12

34 g 3'-(β-Hydroxyethylsulfonyl)-2-chlor-4-aminoazobenzol werden bei 15-20°C in 60 ml 20%iges Oleum eingetragen und 1 Stunde verrührt. Dazu fügt man 40 ml 65%iges Oleum, wobei die Temperatur auf ca. 30-35°C ansteigt. Es wird 3 Stunden bei 35°C gerührt, die Reaktionsmischung auf 500 g Eis ausgetragen und der ausgefallene Farbstoff der Struktur

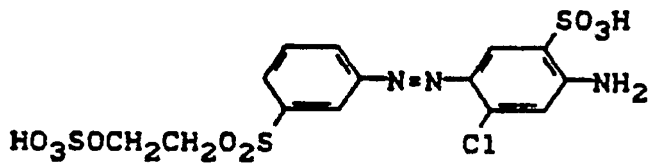

isoliert.

Beispiel 13

Die isolierte Paste aus Beispiel 12 wird in Analogie zu Beispiel 2 diazotiert und auf 3-Methyl-1-(4'-sulfophenyl)-5-hydroxypyrazol unter neutralen Bedingungen gekuppelt. Der so erhaltene Farbstoff der Struktur

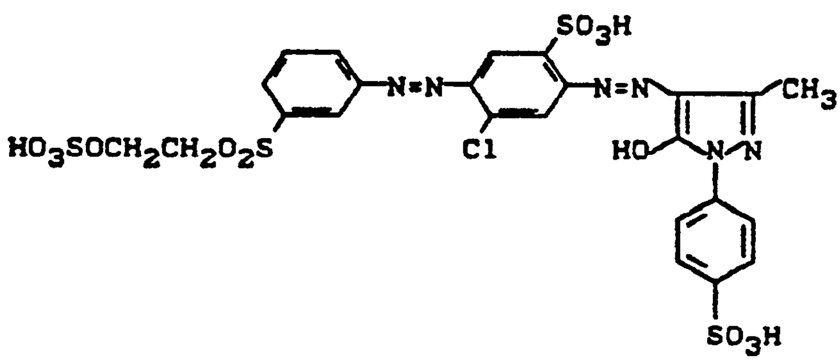

färbt Baumwolle in brillantem Orangeton mit guten Echtheiten. Ganz analog erhält man die folgenden Pyrazolonfarbstoffe :

Beispiel 14

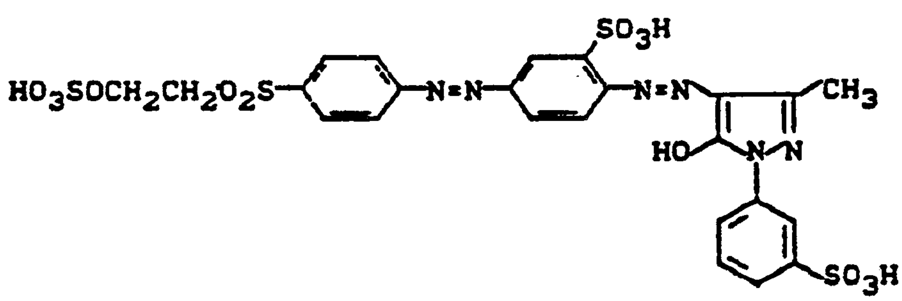

Goldgelb

Beispiel 15

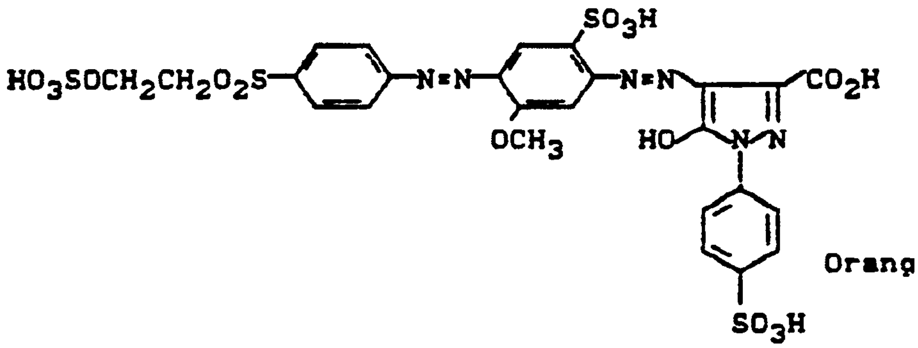

Orangebraun

Beispiel 16

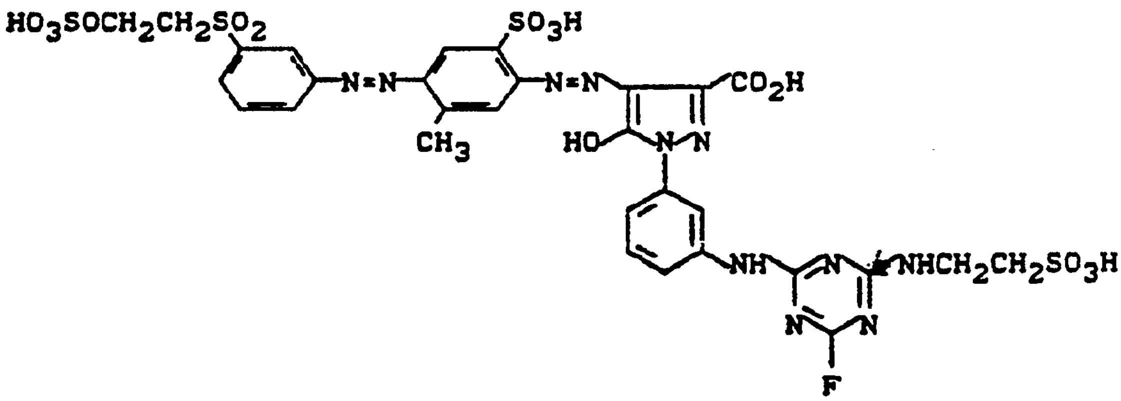

rotstichig Goldgelb

Beispiel 17 und 18

Kuppelt man die Diazokomponente aus Beispiel 1 auf (3-Amino-4-sulfophenyl)harnstoff bzw. 4-Acylamino-2-aminobenzolsulfonsäure, so erhält man folgende Disazofarbstoffe :

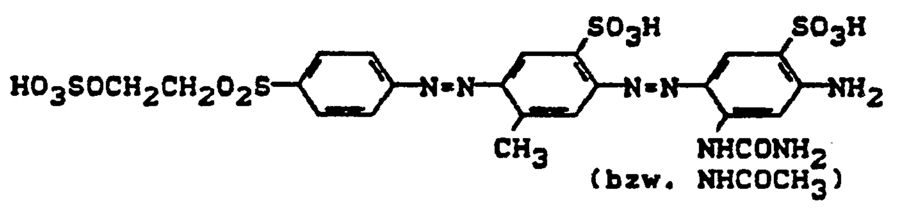

Beispiel 19

Kupplung der Aminoazoverbindung des Beispiel 1 auf (3-Aminophenyl)harnstoff und Kondensation des resultierenden Disazofarbstoffes mit 3-(3',5'-Dichlortriazinylamno)-benzolsulfonsäure liefert einen bifunktionellen Reaktivfarbstoff der Struktur

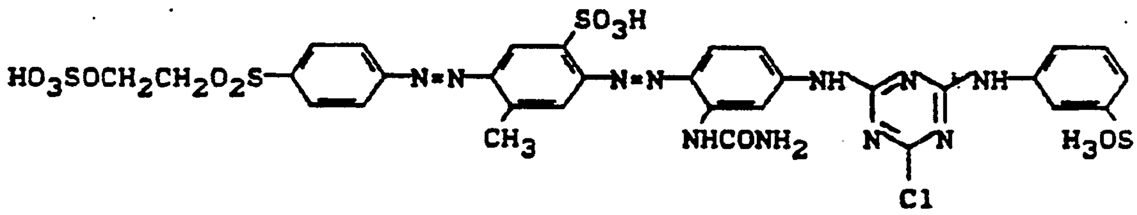

der auf Baumwolle hochechte orangene Drucke liefert.

Beispiel 20

300 g gut getrocknetes 4'-(β-Hydroxyethylsulfonyl)-4-aminoazobenzol werden unter Außenkühlung portionsweise in 600 ml 65%iges Oleum eingetragen, so daß die Temperatur 25°C nicht übersteigt; man rührt 4 Stunden bei 35-40°C und trägt nach vollständiger Sulfierung die Reaktionsmischung auf ca. 2,5 kg Eis aus. Die ausgefallene Aminoazoverbindung der Struktur

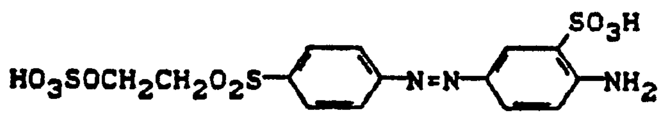

wird abgesaugt, mit gesättigter Kochsalzlösung gewaschen und direkt als Paste weiter umgesetzt.

Beispiel 21

Diazotiert man die Aminoazoverbindung des Beispiels 20 analog zur Vorschrift aus Beispiel 2 und kuppelt bei pH 6 auf 1-Naphthol-3,5-disulfonsäure, so resultiert nach Aussalzen, Absaugen und Trocknen ein Farbstoffpulver der Struktur

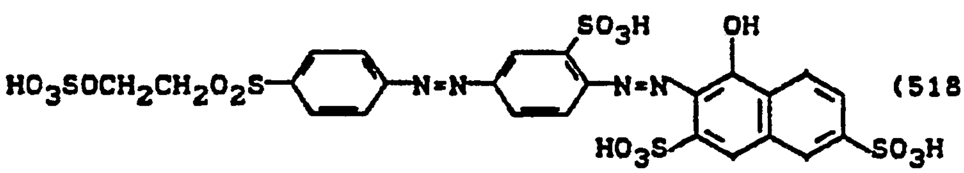

(518 nm)

das auf Baumwolle eine kräftige brillante blaustichig rote Färbung mit ausgezeichneten Licht- und Oxidationsechtheiten liefert.

Durch Variation der Aminoazoverbindung sind weitere wertvolle Rotfarbstoffe der Formel

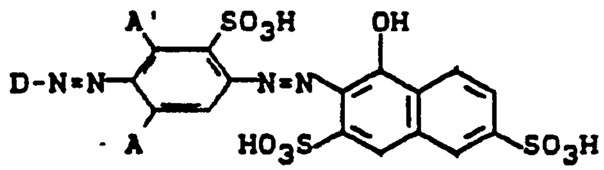

möglich.

| Bsp. | D ($X = CH_2CH_2OSO_3H$) | A | A' | Farbton |
|---|---|---|---|---|
| 22 | 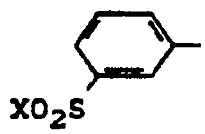 | H | H | blaust.Rot |
| 23 | 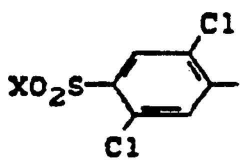 | H | H | " " |
| 24 | 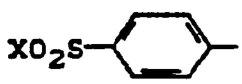 | $CH_3$ | H | " " (520 nm) |
| 25 | 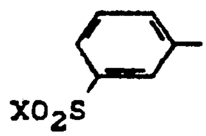 | $CH_3$ | H | " " (516 nm) |
| 26 | 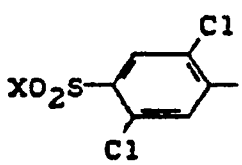 | $CH_3$ | H | " " |
| 27 | 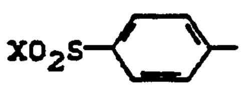 | Cl | H | Rot |
| 28 | " | $CH_3$ | $CH_3$ | Rubin (518 nm) |
| 29 | 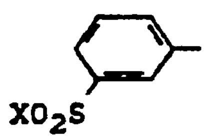 | Cl | H | Rot |
| 30 | 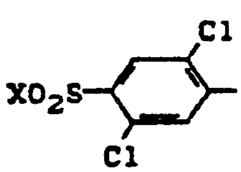 | Cl | H | blaust. Rot |
| 31 | 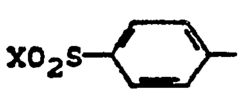 | $OCH_3$ | H | Rubin |

Arbeitet man analog Beispiel 20 unter Verwendung der entsprechenden Kupplungskomponenten, erhält man die Farbstoffe der Beispiele 32 bis 34 :

Beispiel 32

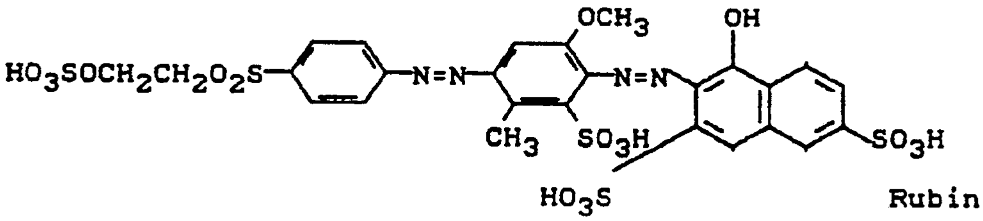

Rubin

Beispiel 33

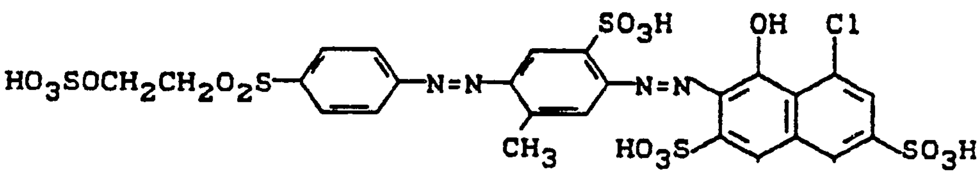

blaust.Rot

Beispiel 34

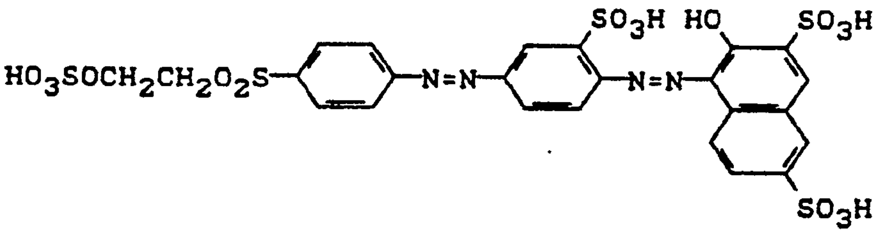

Rot

Beispiel 35

50 g des Farbstoffes der Struktur

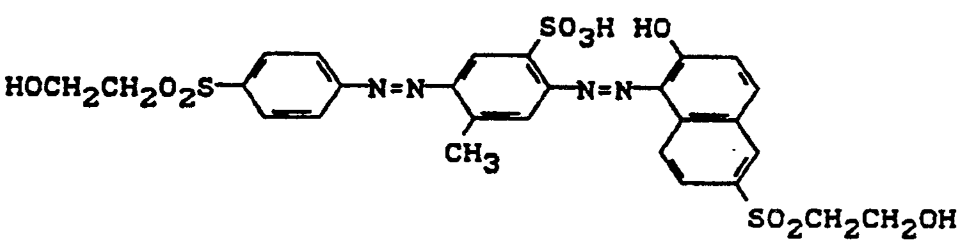

der durch Diazotieren von 4-(β-Hydroxyethylsulfonyl)anilin und Kuppeln auf 2-Amino-4-methylbenzolsulfonsäure und Weiterdiazotieren der Aminoazoverbindung und Zweitkupplung auf 6-(β-Hydroxyethylsulfonyl)-2-naphthol hergestellt wird, werden in 100 ml 98%ige Schwefelsäure eingetragen, 2 Stunden bei Raumtemperatur gerührt und auf 500 g Eis ausgetragen. Der Niederschlag wird abgesaugt, zweimal mit 100 ml gesättigter Kochsalzlösung nachgewaschen und getrocknet. Es werden 82 g eines salzhaltigen dunkelroten Farbstoffes der Formel

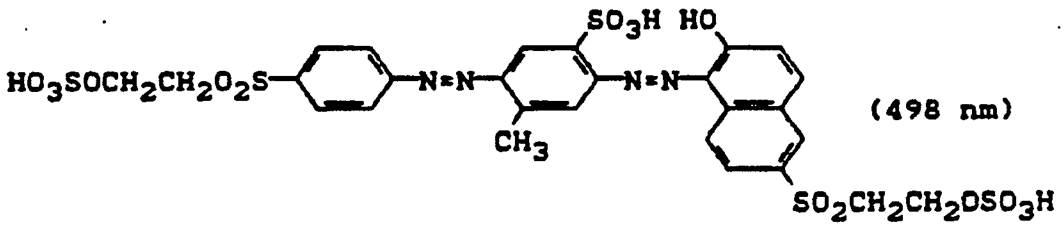

(498 nm)

erhalten, der Baumwolle in brillantem Rot färbt.

Weitere interessante Reaktivfarbstoffe, die ganz analog erhalten werden, sind folgende :

Beispiel 36

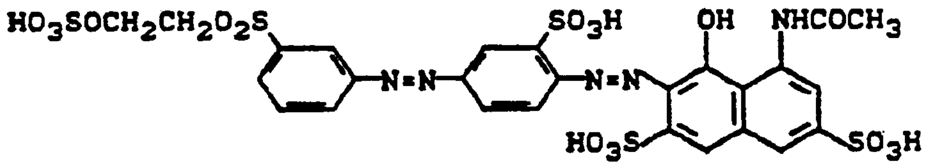

Violett
(526 nm)

**Beispiel 37**

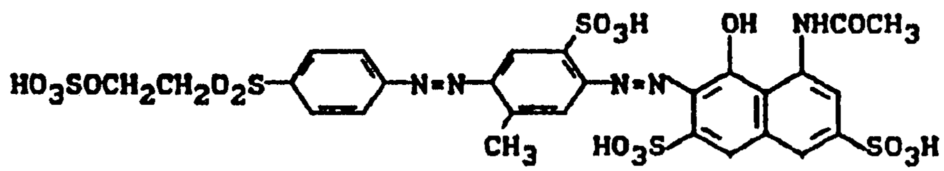

Violett (528 nm)

**Beispiel 38**

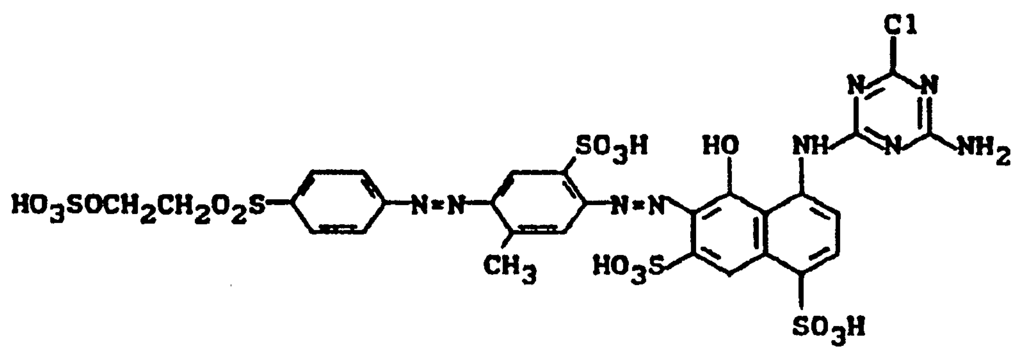

Violett

**Beispiel 39**

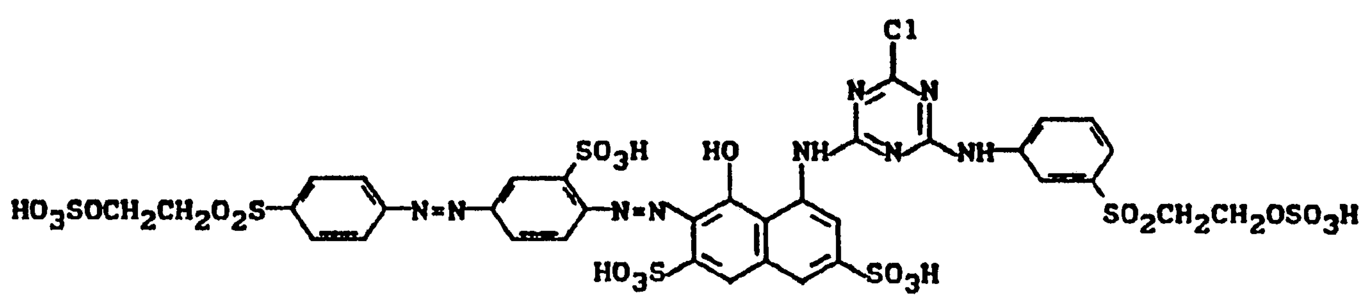

Violett

**Beispiel 40**

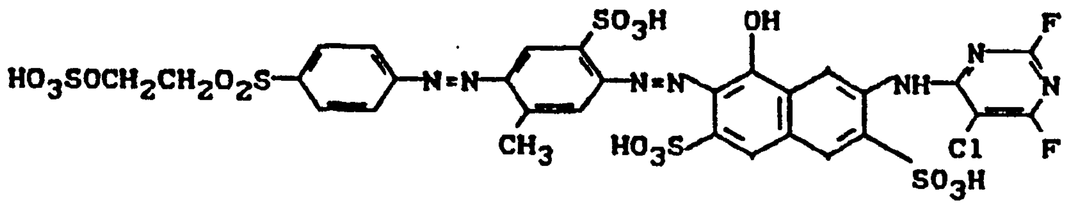

Rubin

**Beispiel 41**

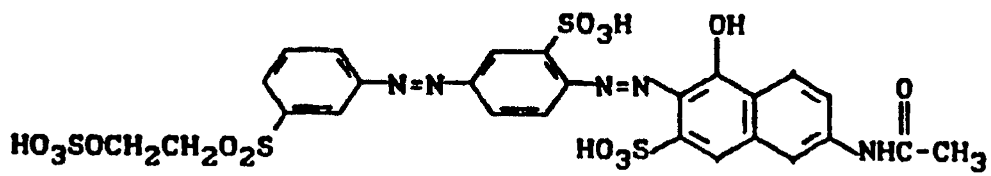

Rot

**Beispiel 42**

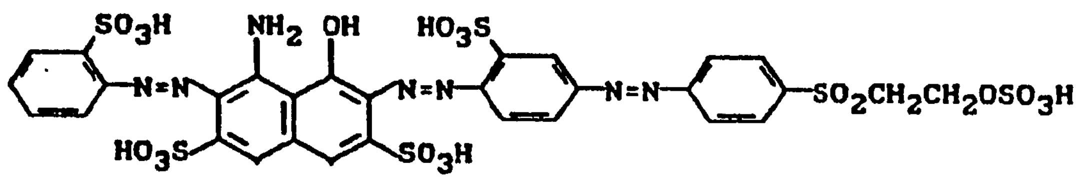

Schwarz

**Beispiel 43**

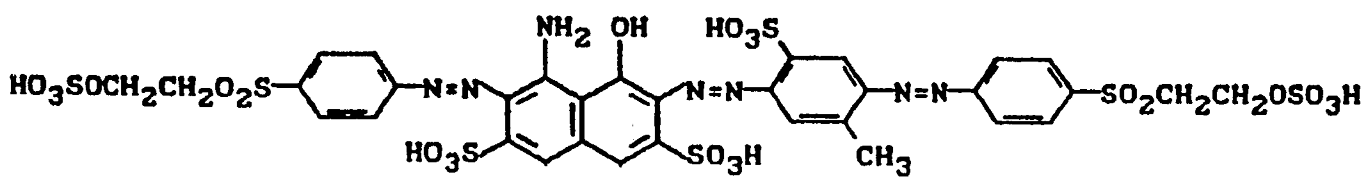

Schwarz (626 nm)

**Beispiel 44**

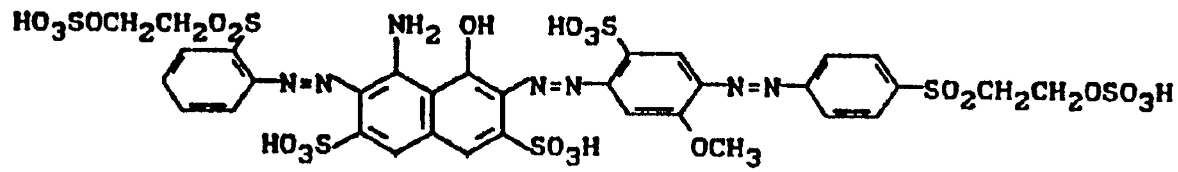

Schwarz

**Beispiel 45**

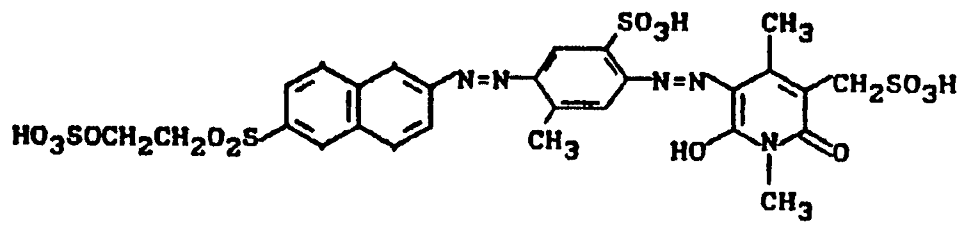

Orange

**Beispiel 46**

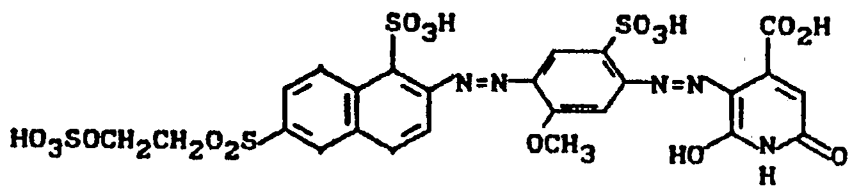

Rot

**Beispiel 47**

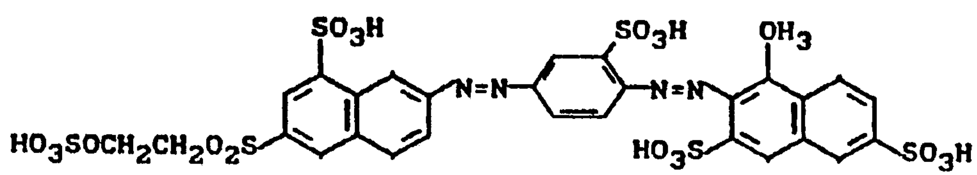

blaustichig Rot

**Patentansprüche**

1. Polyazoreaktivfarbstoffe der Formel

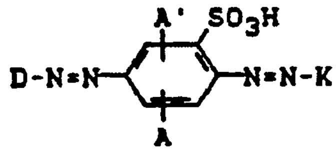

worin

D = Rest einer Diazokomponente der Formeln

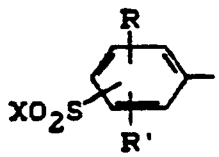

bzw.

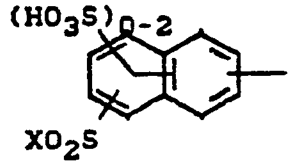

A, A′ = H, $C_1$-$C_4$-Alkyl, $C_1$-$C_4$-Alkoxy oder Halogen,
R, R′ = H, $C_1$-$C_4$-Alkyl, $C_1$-$C_4$-Alkoxy, Halogen, $CO_2H$ oder $SO_3H$,
X = $-CH{=}CH_2$ oder $-CH_2$-$CH_2-Y$, worin
Y = alkalisch eliminierbarer Rest, und
K = Rest einer Kupplungskomponente der Pyridon-, Pyrazolon-, Pyrazolopyridon-, Acetessigsäurearylid-, N-(3-Aminophenyl)acetamid-, 3-Aminophenylureido-, Naphthylamin-, Naphthol-oder Naphtholamin-Reihe, wobei der Rest K weitere Azogruppen oder azogruppenhaltige Reste sowie weitere faserreaktive Reste aufweisen kann.

2. Farbstoffe des Anspruchs 1 der Formel

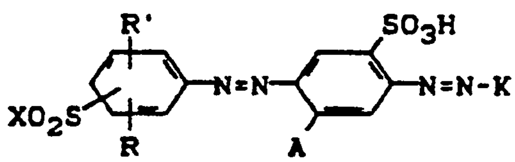

3. Farbstoffe des Anspruchs 2 mit

A = H, $CH_3$, Cl oder $OCH_3$,
R, R′ = H, Cl, $OCH_3$ oder $SO_3H$,
X = $CH_2CH_2OSO_3H$ oder $CH{=}CH_2$ und

K =

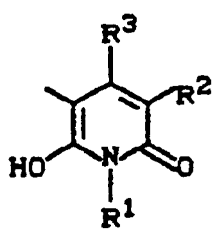

mit

$R^1$ = H, $C_1$-$C_4$-Alkyl, $CH_2CH_2SO_3H$, $CH_2CH_2OSO_3H$, Aryl oder $-(CH_2)_{2\text{-}3}$-NHZ,

$R^2$ = H, Cl, $SO_3H$, $CONH_2$, $CH_2SO_3H$, CN oder $SO_2CH_3$,
$R^3$ = H, $C_1$-$C_4$-Alkyl, $CH_2SO_3H$, Aryl, $CO_2H$, $CO_2CH_3$ oder $CONH_2$, und
Z = H, Acyl, Benzoyl oder faserreaktiver heterocyclischer Rest,

K = 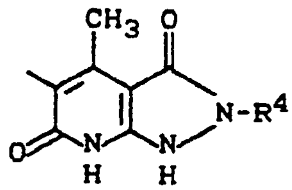

mit

$R^4$ = H, $C_1$-$C_4$-Alkyl, Phenyl, $CH_2CH_2OSO_3H$ oder p-$C_6H_4$-$SO_3H$,

K = 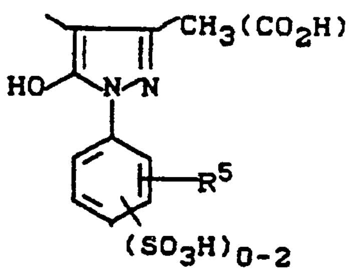

mit

$R^5$ = H, Cl, $CH_3OCH_3$ oder NHZ,

K = 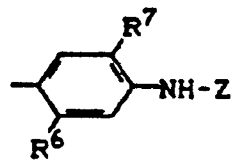

mit

$R^6$ = Ureido, $NHCOCH_3$, $NHCOC_6H_5$ oder $NHSO_2CH_3$, und
$R^7$ = H, $CH_3$, $OCH_3$ oder $SO_3H$,

K = 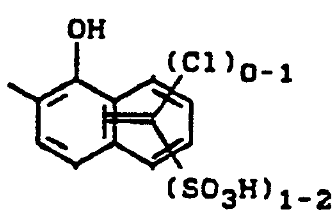 , 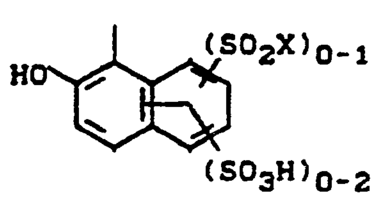 ,

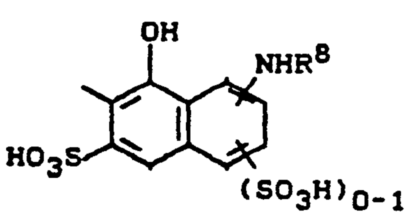 ,

mit

$R^8$ = $C_1$-$C_4$-Alkyl, Phenyl, Aminobenzoyl und Z,

oder K = 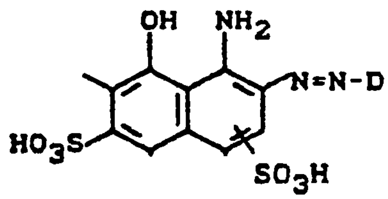

4. Farbstoffe des Anspruchs 1 der Formeln

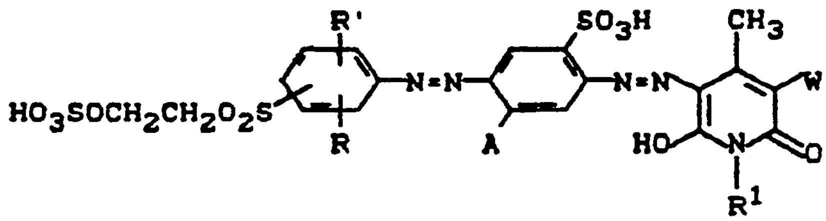

mit W = H, $SO_3H$ oder $CH_2SO_3H$,

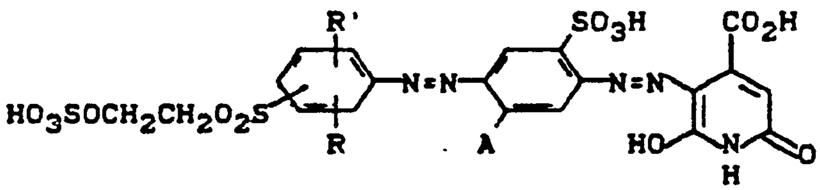

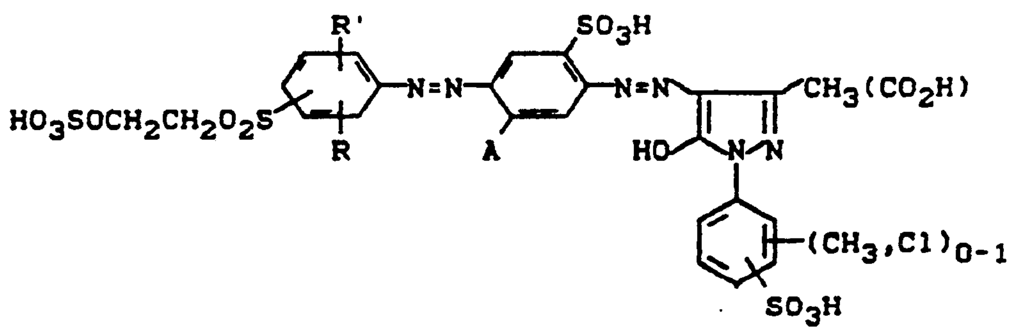

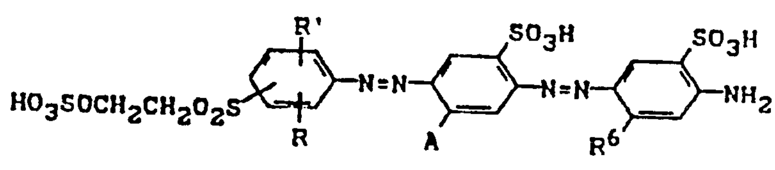

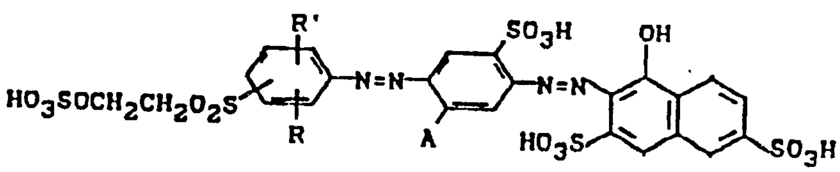

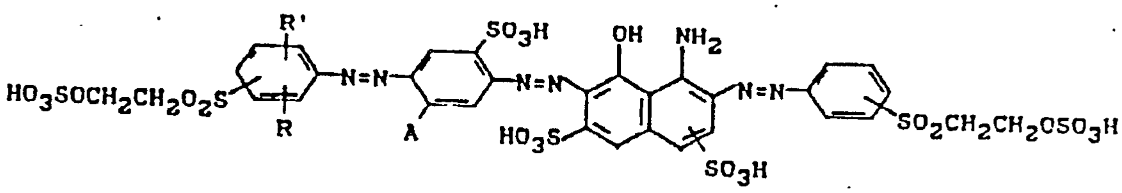

5. Verwendung der Farbstoffe der Ansprüche 1-4 zum Färben und Bedrucken von Hydroxyl- und Amidgruppenhaltigen Materialien.

6. Verwendung der Verbindungen der Formel

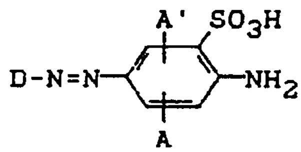

worin D, A und A' die in Anspruch 1 genannte Bedeutung haben, mit Ausnahme des 4'-(β-Sulfatoethylsulfonyl)-3-sulfo-4-aminoazobenzols
zur Herstellung von Farbstoffen des Anspruchs 1.

7. Verwendung der Verbindungen der Formel

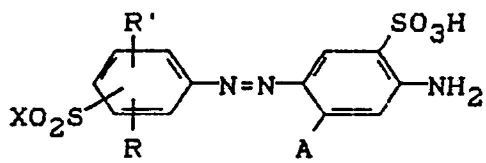

worin X, R' und R die in Anspruch 1 genannte Bedeutung haben und A = $C_1$-$C_4$-Alkyl, $C_1$-$C_4$-Alkoxy oder Halogen zur Herstellung von Farbstoffen des Anspruchs 1.

8. Verwendung der Verbindungen der Formel

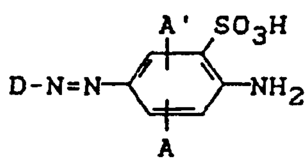

worin D, A und A' die in Anspruch 1 genannte Bedeutung haben, mit Ausnahme des 4'-(β-Sulfatoethylsulfonyl)-3-sulfo-4-aminoazobenzols zum Färben und Bedrucken von Hydroxyl- und Amidgruppenhaltigen Materialien.

9. Verwendung der Verbindungen der Formel

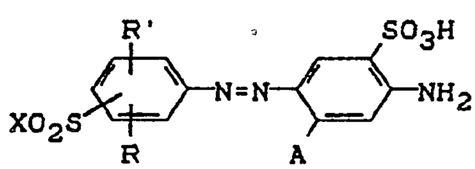

worin X, R' und R die in Anspruch 1 genannte Bedeutung haben und A = $C_1$-$C_4$-Alkyl, $C_1$-$C_4$-Alkoxy oder Halogen zum Färben und Bedrucken Hydroxyl- und Amidgruppen-haltiger Materialien.

10. Verwendung nach Anspruch 9, dadurch gekennzeichnet, daß bedeuten

X = $CH{=}CH_2$, $CH_2$-$CH_2OSO_3H$ oder $CH_2$-$CH_2SSO_3H$,

R bzw. R′ = H, Cl, $OCH_3$ oder $SO_3H$ und
A = $CH_3$, Cl oder $OCH_3$.

## Claims

1. Polyazo reactive dyestuffs of the formula

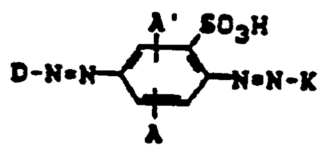

wherein

D = the radical of a diazo component of the formulae

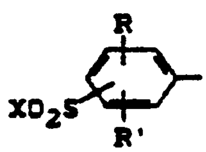

or

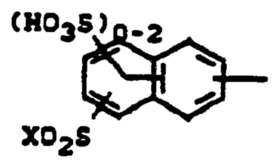

A and A′ = H, $C_1$-$C_4$-alkyl, $C_1$-$C_4$-alkoxy or halogen,
R and R′ = H, $C_1$-$C_4$-alkyl, $C_1$-$C_4$-alkoxy, halogen, $CO_2H$ or $SO_3H$,
X = $-CH{=}CH_2$ or $-CH_2$-$CH_2-Y$, wherein
Y = a radical which can be eliminated under alkaline conditions and
K = the radical of a coupling component of the pyridone, pyrazolone, pyrazolopyridone, acetoacetic acid arylide, N-(3-aminophenyl)acetamide, 3-aminophenylureido, naphthylamine, naphthol or naphtholamine series, it being possible for the radical K to contain further azo groups or radicals containing azo groups and further fibre-reactive radicals.

2. Dyestuffs of Claim 1 of the formula

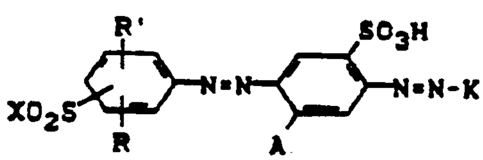

3. Dyestuffs of Claim 2, where

A = H, $CH_3$, Cl or $OCH_3$,
R and R′ = H, Cl, $OCH_3$ or $SO_3H$,
X = $CH_2CH_2OSO_3H$ or $CH{=}CH_2$ and

K =

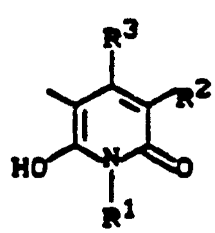

where

$R^1$ = H; $C_1$-$C_4$-alkyl, $CH_2CH_2SO_3H$, $CH_2CH_2OSO_3H$, aryl or $-(CH_2)_{2-3}$-NHZ,
$R^2$ = H, Cl, $SO_3H$, $CONH_2$, $CH_2SO_3H$, CN or $SO_2CH_3$,
$R^3$ = H, $C_1$-$C_4$-alkyl, $CH_2SO_3H$, aryl, $CO_2H$, $CO_2CH_3$ or $CONH_2$ and
Z = H, acyl, benzoyl or a fibre-reactive heterocyclic radical,

K = 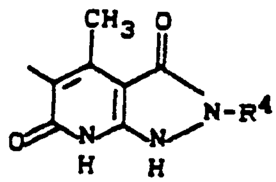

where

$R^4$ = H, $C_1$-$C_4$-alkyl, phenyl, $CH_2CH_2OSO_3H$ or p-$C_6H_4$-$SO_3H$, or

K = 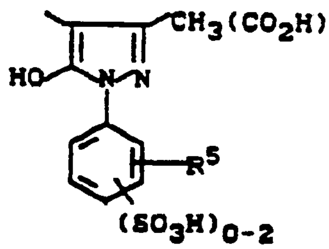

where

$R^5$ = H, Cl, $CH_3$, $OCH_3$ or NHZ, or

K = 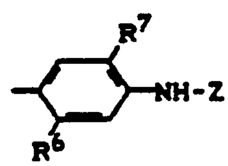

where

$R^6$ = ureido, $NHCOCH_3$, $NHCOC_6H_5$ or $NHSO_2CH_3$ and
$R^7$ = H, $CH_3$, $OCH_3$ or $SO_3H$, or

K = 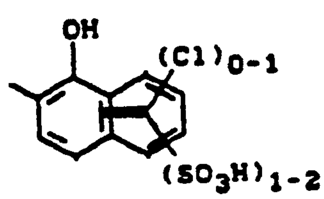 , 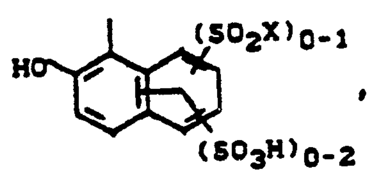 ,

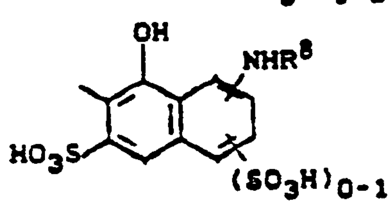 ,

where

$R^8$ = $C_1$-$C_4$-alkyl, phenyl, aminobenzoyl or Z, or

K = 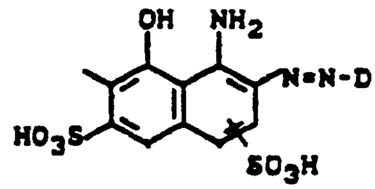

4. Dyestuffs of Claim 1, of the formulae

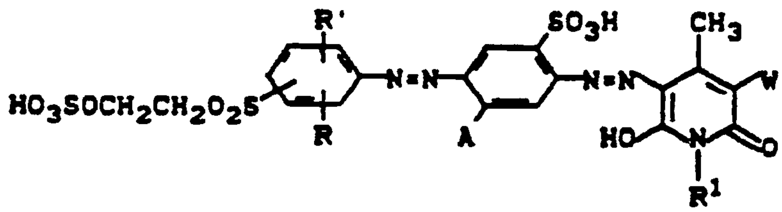

where

W = H, $SO_3H$ or $CH_2SO_3H$,

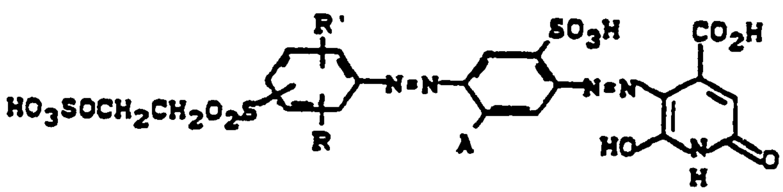

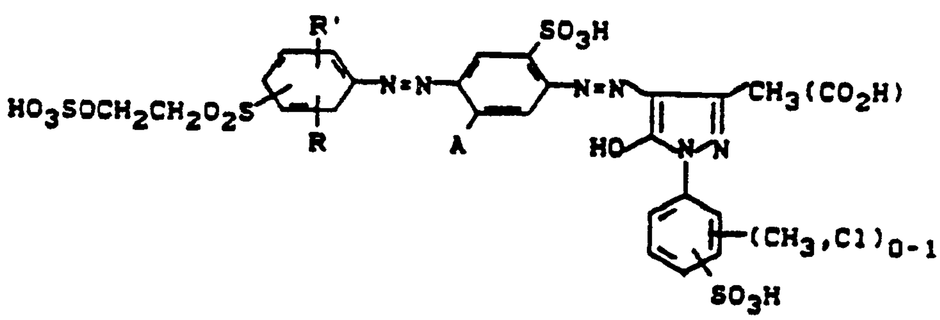

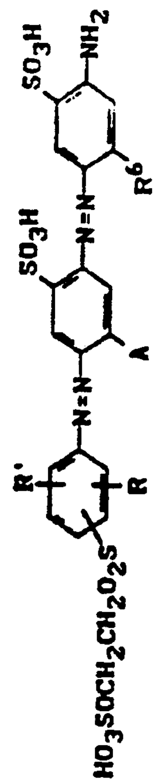

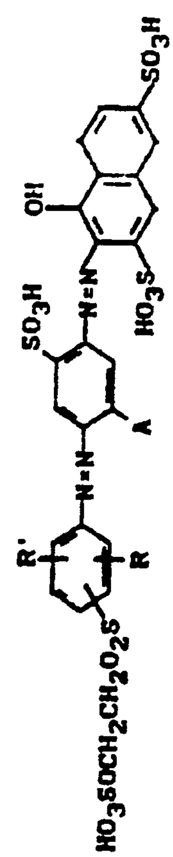

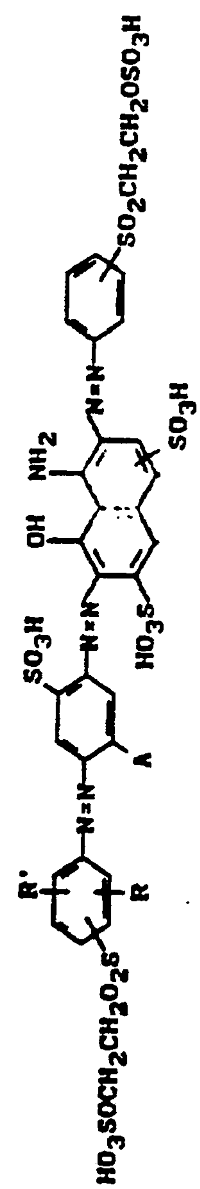

5. Use of the dyestuffs of Claims 1-4 for the dyeing and printing of materials containing hydroxyl and amido groups.

6. Use of compounds of the formula

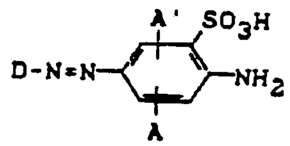

wherein D, A and A′ have the meaning given in Claim 1, with the exception of 4′-(β-sulphatoethylsulphonyl)-3-sulpho-4-aminoazobenzene
for the preparation of dyestuffs of Claim 1.

7. Use of compounds of the formula

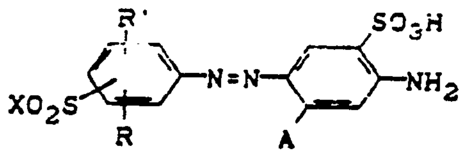

wherein X, R′ and R have the meaning given in Claim 1 and A = $C_1$-$C_4$-alkyl, $C_1$-$C_4$-alkoxy or halogen for the preparation of dyestuffs of Claim 1.

8. Use of compounds of the formula

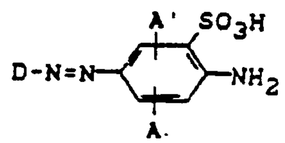

wherein D, A and A′ have the meaning given in Claim 1, with the exception of 4′-(β-sulphatoethylsulphonyl)-3-sulpho-4-aminoazobenzene for the dyeing and printing of materials containing hydroxyl and amido groups.

9. Use of compounds of the formula

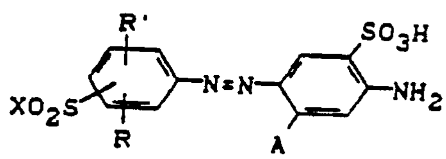

wherein X, R′ and R have the meaning given in Claim 1 and A = $C_1$-$C_4$-alkyl, $C_1$-$C_4$-alkoxy or halogen for the dyeing and printing of materials containing hydroxyl and amido groups.

10. Use according to Claim 9, characterised in that

| | |
|---|---|
| X | denotes $CH=CH_2$, $CH_2$-$CH_2OSO_3H$ or $CH_2$-$CH_2SSO_3H$, |
| R and R′ | denote H, Cl, $OCH_3$ or $SO_3H$ and |
| A | denotes $CH_3$, Cl or $OCH_3$. |

## Revendications

1. Colorants réactifs polyazoïques de formule

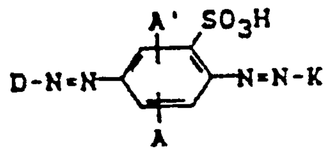

dans laquelle

| | |
|---|---|
| D | représente le reste d'un composant diazotable de formules |

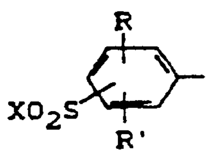

et

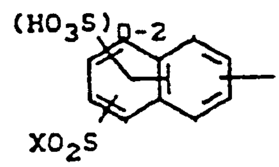

| | |
|---|---|
| A, A' = | H, alkyle en $C_1$ à $C_4$, alkoxy en $C_1$ à $C_4$ ou halogène, |
| R, R' = | H, alkyle en $C_1$ à $C_4$, alkoxy en $C_1$ à $C_4$, halogène, $CO_2H$ ou $SO_3H$, |
| X = | $-CH=CH_2$ ou $-CH_2-CH_2-Y$, où |
| Y = | reste éliminable par voie alcaline, et |
| K = | reste d'un copulant de la série de la pyridone, de la pyrazolone, de la pyrazolopyridone, des arylides d'acide acétylacétique, du N-(3-aminophényl)-acétamide, des dérivés 3-aminophényluréido, de la naphtylamine, du naphtol ou de la naphtolamine, le reste K pouvant présenter d'autres groupes azoïques ou des restes contenant des groupes azoïques ainsi que d'autres restes réactifs envers la fibre. |

2. Colorants suivant la revendication 1, de formule

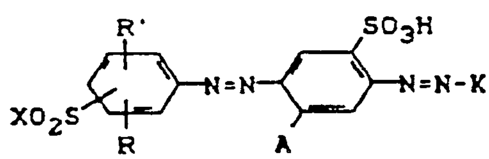

3. Colorants suivant la revendication 2, dans lesquels

| | |
|---|---|
| A = | H, $CH_3$, Cl ou $OCH_3$, |
| R, R' = | H, Cl, $OCH_3$ ou $SO_3H$, |
| X = | $CH_2CH_2OSO_3H$ ou $CH=CH_2$ et |

K =

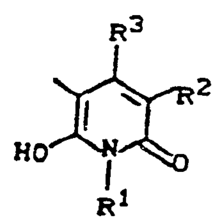

avec

| | |
|---|---|
| $R^1$ = | H, alkyle en $C_1$ à $C_4$, $CH_2CH_2SO_3H$, $CH_2CH_2OSO_3H$, aryle ou $-(CH_2)_{2-3}$-NHZ, |
| $R^2$ = | H, Cl, $SO_3H$, $CONH_2$, $CH_2SO_3H$, CN ou $SO_2CH_3$, |
| $R^3$ = | H, alkyle en $C_1$ à $C_4$, $CH_2SO_3H$, aryle, $CO_2H$, $CO_2CH_3$ ou $CONH_2$, et |
| Z = | H, acyle, benzoyle ou reste hétérocyclique réactif envers la fibre, |

K = 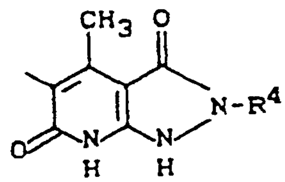

avec

$R^4$ = H, alkyle en $C_1$ à $C_4$, phényle, $CH_2CH_2OSO_3H$ ou p-$C_6H_4$-$SO_3H$,

K = 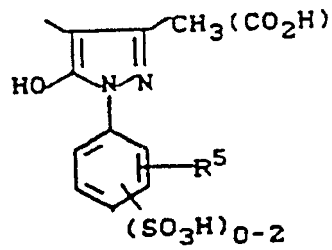

avec

$R^5$ = H, Cl, $CH_3$, $OCH_3$ ou NHZ,

K = 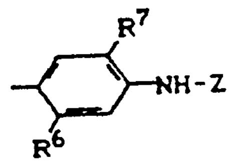

avec

$R^6$ = uréido, $NHCOCH_3$, $NHCOC_6H_5$ ou $NHSO_2CH_3$, et
$R^7$ = H, $CH_3$, $OCH_3$ ou $SO_3H$,

K = 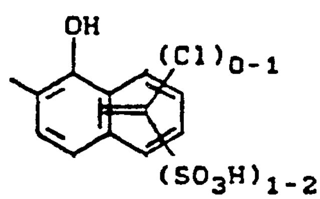 , 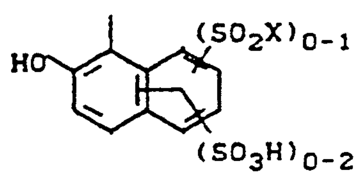 ,

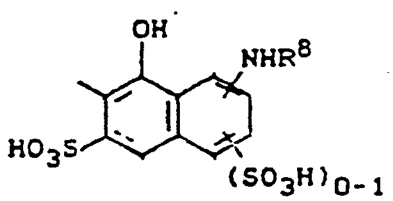 ,

avec

$R^8$ = alkyle en $C_1$ à $C_4$, phényle, aminobenzoyle et Z, ou bien

K =

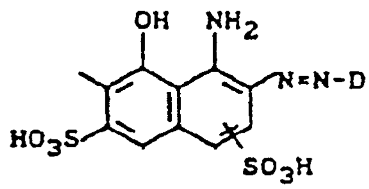

4. Colorants suivant la revendication 1, de formules

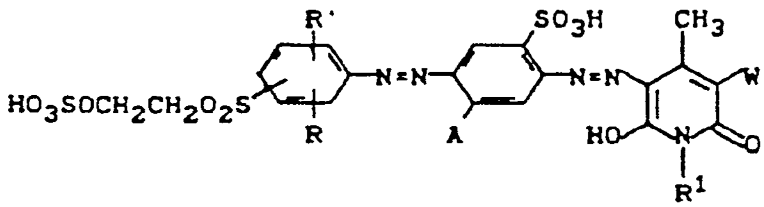

avec W = H, $SO_3H$ ou $CH_2SO_3H$,

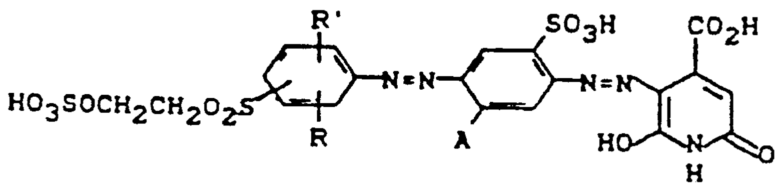

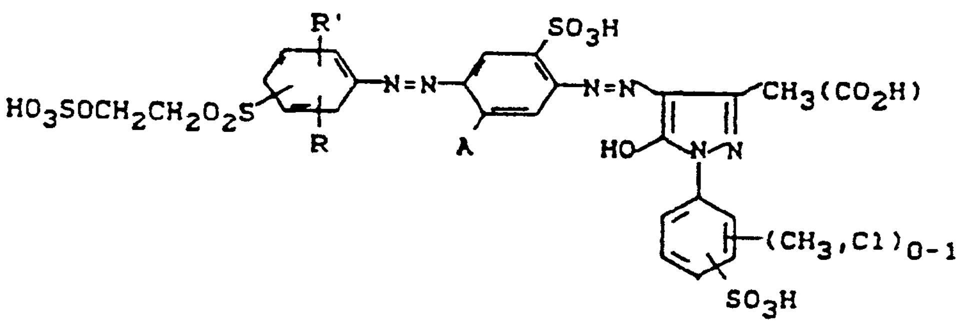

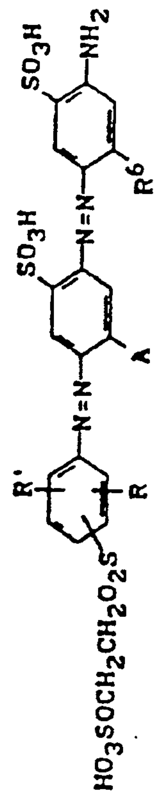

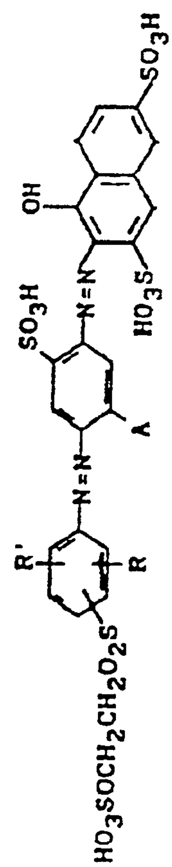

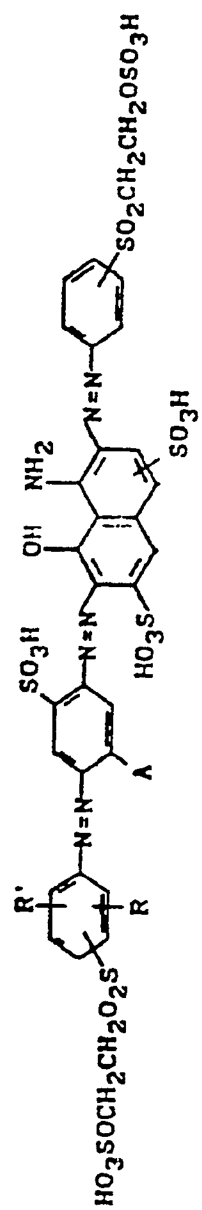

5. Utilisation des colorants suivant les revendications 1 à 4 pour la teinture et l'impression de matières contenant des groupes hydroxyle et des groupes amido.

6. Utilisation des composés de formule

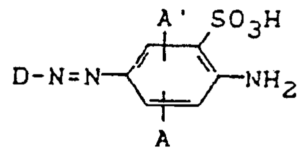

dans laquelle D, A et A' ont la définition mentionnée dans la revendication 1, à l'exception du 4'-(β-sulfato-éthyl-sulfonyl)-3-sulfo-4-aminobenzène pour la préparation de colorants suivant la revendication 1.

7. Utilisation des composés de formule

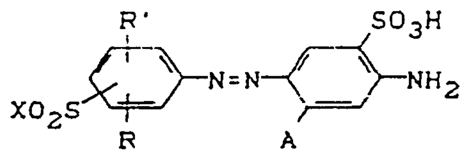

dans laquelle X, R' et R ont la définition mentionnée dans la revendication 1 et A est un groupe alkyle en $C_1$ à $C_4$, alkoxy en $C_1$ à $C_4$ ou un halogène, pour la préparation de colorants suivant la revendication 1.

8. Utilisation des composés de formule

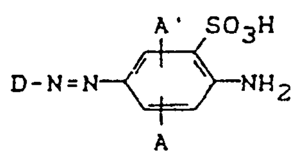

dans laquelle D, A et A' ont la définition indiquée dans la revendication 1, à l'exception du 4'-(β-sulfato-éthyl-sulfonyl)-3-sulfo-4-amino-azobenzène pour la teinture et l'impression de matières contenant des groupes hydroxyle et amido.

9. Utilisation de composés de formule

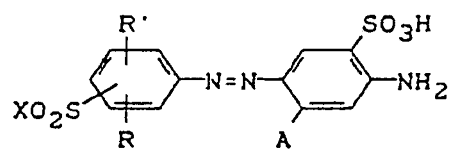

dans laquelle X, R' et R ont la définition mentionnée dans la revendication 1 et A est un groupe alkyle en $C_1$ à $C_4$, alkoxy en $C_1$ à $C_4$ ou un halogène, pour la teinture et l'impression de matières contenant des groupes hydroxyle et amido.

10. Utilisation suivant la revendication 9, caractérisée en ce que

| | |
|---|---|
| X = | $CH=CH_2$, $CH_2-CH_2OSO_3H$ ou $CH_2-CH_2SSO_3H$, |
| R ou R' = | H, Cl, $OCH_3$ ou $SO_3H$ et |
| A = | $CH_3$, Cl ou $OCH_3$. |